# EUROPÄISCHE PATENTSCHRIFT

(11) **EP 4 495 504 B1**
(45) Veröffentlichungstag und Bekanntmachung des Hinweises auf die Patenterteilung: **17.12.2025**
(21) Anmeldenummer: 24154257.0
(22) Anmeldetag: 26.01.2024
(51) Int. Cl.: F25B 13/00, F25B 40/00, F25B 41/20

(54) **KÄLTEMITTELKREISLAUF UND WÄRMEPUMPE**
REFRIGERANT CIRCUIT AND HEAT PUMP
CIRCUIT DE RÉFRIGÉRANT ET POMPE À CHALEUR

(30) Priorität: 21.07.2023 DE 102023119273
(43) Veröffentlichungstag der Anmeldung: 22.01.2025
(73) Patentinhaber: Viessmann Holding International GmbH, 35108 Allendorf (Eder) (DE)
(72) Erfinder: TANNERT, Thomas, 01445 Radebeul (DE)
(74) Vertreter: MERH-IP Matias Erny Reichl Hoffmann Patentanwälte PartG mbB

(56) Entgegenhaltungen:
- EP-A1- 1 471 316
- WO-A1-2009/087733
- US-A1- 2003 154 730
- US-B1- 6 817 205

## Beschreibung

Die vorliegende Erfindung betrifft einen Kältemittelkreislauf, insbesondere einen Kältemittelkreislauf für eine Wärmepumpe sowie eine Wärmepumpe zum Heizen und Kühlen eines Gebäudes.

### Hintergrund der Erfindung

Wärmepumpen ermöglichen es, frei verfügbare Energie aus der Umwelt zum Heizen und/oder Kühlen eines Gebäudes zu verwenden und tragen somit zur Reduzierung des CO₂-Ausstoßes im Gebäudesektor bei. Insbesondere kann ein Kältemittelkreislauf einer Wärmepumpe sowohl zum Heizen als auch zum Kühlen dienen, indem darin enthaltene Wärmeübertrager sowohl als Verdampfer als auch als Kondensator eingesetzt werden können. Beispielsweise kann mittels Umkehr des Kältemittelkreislaufs ein im Heizbetrieb als Kondensator arbeitender Wärmeübertrager im Kühlbetrieb als Verdampfer fungierend und vice versa, wodurch z.B. ein Sekundärkreislauf des entsprechenden Wärmeübertragers im Heizbetrieb Wärme an das Gebäude abgeben und im Kühlbetrieb Wärme aus dem Gebäude aufnehmen kann. Eine Umkehr des Kältemittelkreislaufs kann dabei auf unterschiedliche Art und Weise erfolgen.

In diesem Zusammenhang zeigt das europäische Patent EP 1 980 803 B1 eine Wärmepumpenvorrichtung mit einem Kompressor, einem Kondensator, einem Expansionsventil, einem Verdampfer und einem ersten und zweiten Umschaltventil, bei der das erste und zweite Umschaltventil derart angeordnet sind, dass der Kompressor, der Kondensator, das Expansionsventil und der Verdampfer jeweils an ihrem ersten Ende mit dem ersten Umschaltventil und an ihrem zweiten Ende mit dem zweiten Umschaltventil gekoppelt sind, wodurch der Verdampfer und der Kondensator sowohl beim Heizen als auch beim Kühlen in gleicher Richtung durchströmt werden.

US 2003/154730 A1 offenbart ein System zum Kühlen und Heizen, das einen ersten Wärmeübertrager zur Abgabe und Aufnahme von Wärme an bzw. aus einem Wärmereservoir sowie einen zweiten Wärmeübertrager zur Wärmeaufnahme aus bzw. -abgabe an einen zu kühlenden oder zu beheizenden Raum umfasst. Zu dem System gehören ein Verdichter, ein Expansionsorgan und Mittel zum Umschalten zwischen Kühl- und Heizbetrieb, die in einem Modul integriert sind.

EP 1 471 316 A1 offenbart ein reversibles Wärmepumpensystem, das einen Kompressor, einen inneren Wärmeübertrager, eine Expansionsvorrichtung und einen äußeren Wärmeübertrager umfasst, die in Reihe mit einem im System zirkulierenden Kältemittel verbunden sind. Ein erstes Vierwegeventil dient dazu, das Kältemittel vom Auslass des Kompressors wahlweise zum inneren oder äußeren Wärmeübertrager zu leiten und von dort zur Ansaugöffnung des Kompressors zurückzuführen. Ein zweites Vierwegeventil ermöglicht es, das Kältemittel vom inneren oder äußeren Wärmeübertrager zur Einlassöffnung der Expansionsvorrichtung zu leiten und vom Auslass der Expansionsvorrichtung zurück zum äußeren oder inneren Wärmeübertrager zu führen.

WO 2009/087733 A1 offenbart eine Kältekreiseinrichtung mit einem Aufbau, bei dem ein Verdichter, ein erster Wärmeübertrager, eine Druckreduzierstrecke und ein zweiter Wärmeübertrager über Rohrleitungen zu einem Kältemittelkreislauf verbunden sind. Ein Haupt-Vierwegeventil schaltet durch Positionsänderung eines Ventilelements zwischen internen Strömungspfaden um, um die Flussrichtung des Fluids im Kältemittelkreislauf zu ändern. Ein pilotgesteuertes Vierwegeventil verändert lokal die durch das Haupt-Vierwegeventil bewirkte Strömungsrichtung, ebenfalls durch Umschalten der internen Strömungspfade mittels eines Ventilelements. Das Ventilelement des Haupt-Vierwegeventils wird elektrisch betätigt, während das Ventilelement des pilotgesteuerten Vierwegeventils durch einen Druckwechsel im Kältemittelkreislauf bewegt wird, der durch das Umschalten der Strömungsrichtung entsteht.

US 6 817 205 B1 offenbart ein Kältemittelsystem, mit einem Economizer-Kreis der im Heiz- und im Kühlbetrieb des Systems eingesetzt werden kann. Dabei steuern zwei Vierwegeventile den Kältemittelfluss im Kreislauf, wobei das erste Vierwegeventil das Kältemittel vom Verdichter abhängig vom Betriebsmodus entweder zum Außenwärmeübertrager oder zum Innenwärmeübertrager leitet. Das zweite Vierwegeventil leitet das Kältemittel abhängig vom Betriebsmodus seriell entweder vom Außen- oder vom Innenwärmeübertrager durch einen Economizer-Wärmeübertrager und anschließend durch eine Hauptexpansionsvorrichtung. Eine Abzweigstelle vor dem Economizer-Wärmeübertrager entnimmt einen Teilstrom des Kältemittels zur Realisierung der Economizer-Funktion.

Je nach verwendeter Wärmeübertragerbauart kann es jedoch von Vorteil sein, eine Primärseite des Wärmeübertragers in umgekehrter Richtung zu durchströmen, wenn er als Verdampfer anstatt als Kondensator betrieben wird und umgekehrt. Dies kann jedoch zu einer erhöhten Komplexität des Kältemittelkreislaufs führen, da beispielsweise zwei Expansionsventile, z.B. vor und nach einem Kältemittelsammler, erforderlich sein können, um in beiden Strömungsrichtungen Kältemittel in den jeweiligen Verdampfer einzubringen.

Eine Aufgabe der vorliegenden Erfindung ist es, einen Kältemittelkreislauf mit wechselnder Durchströmungsrichtung der Wärmeübertrager bei Kreislaufumkehr bereitzustellen, der einen kompakten Aufbau aufweist und keine zusätzlichen Komponenten (Aktoren, Sensoren) erfordert.

Zur Lösung der Aufgaben werden die Merkmale des unabhängigen Anspruchs 1 vorgeschlagen. Vorteilhafte Ausgestaltungen finden sich in den abhängigen Ansprüchen.

### Offenbarung der Erfindung

Ein erfindungsgemäßer Kältemittelkreislauf, wie in Anspruch 1 definiert, umfasst einen ersten und einen zweiten Wärmeübertrager, wobei jeder der beiden Wärmeübertrager dazu eingerichtet ist als Verdampfer oder als Kondensator zu fungieren.

Der Kältemittelkreislauf kann insbesondere in einer Wärmepumpe zum Heizen und Kühlen eines Gebäudes zum Einsatz kommen, wobei die Wärmepumpe insbesondere eine Luft-Wasser- oder eine Sole-Wasser-Wärmepumpe sein kann. Dabei kann der erste Wärmeübertrager z.B. dazu eingerichtet sein, als Verdampfer Wärme aus einer äußerer Umgebung (z.B. aus Außenluft, Umgebungsluft, Erdsonde, Erdkollektor) des Gebäudes aufzunehmen und als Kondensator Wärme an die äußere Umgebung des Gebäudes abzugeben. Beispielsweise kann es sich bei dem ersten Wärmeübertrager um einen Lamellen-Rohr-Wärmeübertrager handeln. Der zweite Wärmeübertrager kann hingegen dazu eingerichtet sein, als Kondensator Wärme an einen Heiz-/Kühlkreislauf des Gebäudes abzugeben und als Verdampfer Wärme aus dem Heiz-/Kühlkreislauf des Gebäudes aufzunehmen. Beispielsweise kann der zweite Wärmeübertrager dazu als Plattenwärmeübertrager ausgeführt sein. Um das Gebäude zu heizen, kann der erste Wärmeübertrager als Verdampfer und der zweite Wärmeübertrager als Kondensator arbeiten. Im Gegenzug kann der zweite Wärmeübertrager als Verdampfer und der erste Wärmeübertrager als Kondensator arbeiten, um das Gebäude zu kühlen.

Es ist jedoch ebenso möglich, dass der Kältemittelkreislauf in Klimageräten und/oder Kälteanlagen zum Einsatz kommt.

Der Kältemittelkreislauf enthält neben den beiden Wärmeübertragern eine Kompressionsstrecke, die stromabwärts des ersten Wärmeübertragers oder stromabwärts des zweiten Wärmeübertragers angeordnet ist. Insbesondere kann die Kompressionsstrecke stromabwärts desjenigen der beiden Wärmeübertrager angeordnet sein, der als Verdampfer fungiert. Mit anderen Worten kann die Kompressionsstrecke zwischen dem Wärmeübertrager, der gerade als Verdampfer arbeitet, und dem Wärmeübertrager, der gerade als Kondensator arbeitet, angeordnet sein.

Insbesondere kann die Kompressionsstrecke mindestens einen Kompressor aufweisen, mit dem aus dem als Verdampfer fungierenden Wärmeübertrager austretendes, dampfförmiges Kältemittel von einem niedrigen Druckniveau auf ein hohes Druckniveau (Kondensationsdruck) komprimiert werden kann. In der Kompressionsstrecke kann vor und nach dem Kompressor ein Druck- und Temperatursensor sowie nach dem Kompressor zusätzlich ein Sicherheitshochdruckschalter angebracht sein.

Weiterhin enthält der Kältemittelkreislauf eine Expansionsstrecke, die stromabwärts des zweiten Wärmeübertragers oder stromabwärts des ersten Wärmeübertragers angeordnet ist. Insbesondere kann die Expansionsstrecke stromabwärts desjenigen der beiden Wärmeübertrager angeordnet sein, der als Kondensator fungiert. Mit anderen Worten kann die Expansionsstrecke zwischen dem Wärmeübertrager, der gerade als Kondensator arbeitet, und dem Wärmeübertrager, der gerade als Verdampfer arbeitet, angeordnet sein.

Gemäß einer Ausführungsform kann die Expansionsstrecke mindestens einen Kältemittelsammler und mindestens ein Expansionsventil aufweisen, wobei das Expansionsventil insbesondere stromabwärts des Kältemittelsammlers angeordnet sein kann. In dem Kältemittelsammler kann bei variierenden Randbedingungen des Kältemittelkreislaufs nicht benötigtes Kältemittel gespeichert und bei Bedarf wieder freigegeben werden. Zwischen dem Kältemittelsammler und dem Expansionsventil kann in der Expansionsstrecke zudem ein Filter angeordnet sein, der das Expansionsventil vor Partikeln schützt. Bei dem Expansionsventil kann es sich um ein thermostatisches oder um ein elektronisches Expansionsventil handeln. Letzteres kann beispielsweise mittels einer Recheneinheit, die beispielsweise eine Steuerung der Wärmepumpe sein kann, in Abhängigkeit von einem Druck und einer Temperatur des Kältemittels vor dem Kompressor angesteuert werden. Insbesondere kann mittels des Expansionsventils eine Überhitzung des Kältemittels vor dem Kompressor geregelt werden, so dass dieses bei Eintritt in den Kompressor stets dampfförmig vorliegt. Die einzelnen Elemente der Expansionsstrecke können mit Kältemittelleitungen/ Kältemittelkanälen miteinander verbunden sein.

Des Weiteren umfasst der Kältemittelkreislauf ein erstes Wegeventil, das dazu eingerichtet ist, der Expansionsstecke Kältemittel zuzuführen und Kältemittel aus der Expansionsstecke abzuführen, sowie ein zweites Wegeventil, das dazu eingerichtet ist, der Kompressionsstrecke Kältemittel zuzuführen und Kältemittel aus der Kompressionsstrecke abzuführen. Mit anderen Worten schaltet das erste Wegeventil Kältemittelströme, welche die Expansionstrecke betreffen, und das zweite Wegeventil schaltet Kältemittelströme, welche die Kompressionsstrecke betreffen. Das erste und zweite Wegeventil können insbesondere 4/2-Wegeventile sein.

Dabei dient das erste Wegeventil insbesondere dazu, Kältemittel von dem Wärmeübertrager, der gerade als Kondensator arbeitet (nachfolgend kurz als "jeweiliger Kondensator" bezeichnet), in die Expansionsstrecke zu leiten und dieses anschließend dem Wärmeübertrager zuzuführen, der gerade als Verdampfer arbeitet (nachfolgend kurz als "jeweiliger Verdampfer" bezeichnet).

Gemäß einer Ausführungsform kann dazu ein erster Anschluss des ersten Wegeventils mit einem Ende der Expansionsstrecke und ein zweiter Anschluss des ersten Wegeventils mit einem anderen Ende der Expansionsstrecke verbunden sein. Die Expansionstrecke kann dazu entsprechende Kältemittelleitungen/-kanäle aufweisen. Somit kann der erste Anschluss des ersten Wegeventils einen Eingang in die Expansionstrecke und der zweite Anschluss des ersten Wegeventils einen Ausgang aus der Expansionsstecke bilden. Das erste Wegeventil kann insbesondere dazu eingerichtet sein, einen aus dem jeweiligen Kondensator austretenden Kältemittelstrom über den ersten Anschluss in die Expansionsstecke, z.B. zu dem Kältemittelsammler, zu leiten und diesen über das Expansionsventil und den zweiten Anschluss aus der Expansionstrecke dem jeweiligen Verdampfer zuzuführen. Dazu können der erste und zweite Wärmeübertrager mittels entsprechender Kältemittelleitungen/Kältemittelkanäle mit dem ersten Wegeventil verbunden sein.

Im Gegenzug dient das zweite Wegeventil insbesondere dazu, Kältemittel von dem jeweiligen Verdampfer in die Kompressionstrecke zu leiten und Heißgas aus der Kompressionsstrecke dem jeweiligen Kondensator zuzuführen.

Gemäß einer Ausführungsform kann dazu ein erster Anschluss des zweiten Wegeventils mit einem Ende der Kompressionsstrecke und ein zweiter Anschluss des zweiten Wegeventils mit dem anderen Ende der Kompressionsstrecke (90) verbunden sein. Somit kann der erste Anschluss des zweiten Wegeventils einen Eingang in die Kompressionsstrecke und der zweite Anschluss des zweiten Wegeventils einen Ausgang aus der Kompressionsstrecke bilden. Das zweite Wegeventil kann insbesondere dazu eingerichtet sein, einen aus dem jeweiligen Verdampfer austretenden Kältemittelstrom (Niederdruck-Sauggasstrom) über den ersten Anschluss in die Kompressionsstrecke zu leiten und aus dem Kompressor austretendes, verdichtetes Heißgas über den zweiten Anschluss aus der Kompressionsstrecke dem jeweiligen Kondensator zuzuführen. Dazu können der erste und zweite Wärmeübertrager mittels weiterer Kältemittelleitungen/ Kältemittelkanäle mit dem zweiten Wegeventil verbunden sein. Außerdem können innerhalb der Kompressionstrecke Kältemittelleitungen angeordnet sein, welche z.B. den Kompressor mit dem ersten und zweiten Anschluss des zweiten Wegeventils verbinden. Vor dem ersten Anschluss des zweiten Wegeventils kann in der Kompressionsstrecke zudem ein Filter angeordnet sein, der das zweite Wegeventil vor Partikeln schützen kann.

Gemäß einer Ausführungsform können das erste und zweite Wegeventil synchron von einer ersten Stellung in eine zweite Stellung umgeschaltet werden und umgekehrt. Dabei können in jeder der beiden Stellungen die beiden Wegeventile derart geschaltet sein, dass einer der beiden Wärmeübertrager als Verdampfer und der andere als Kondensator fungiert.

Gemäß einer Ausführungsform kann, wenn sich das erste und das zweite Wegeventil jeweils in ihrer ersten Stellung befinden, der erste Wärmeübertrager als Verdampfer und der zweite Wärmeübertrager als Kondensator arbeiten. Dazu kann der erste Wärmeübertrager mit dem zweiten Anschluss und der zweite Wärmeübertrager mit dem ersten Anschluss des ersten Wegeventils verbunden sein. Mit anderen Worten kann das erste Wegeventil in seiner ersten Stellung derart geschaltet sein, dass ein aus dem zweiten Wärmeübertrager austretender Hochdruck-Flüssigkältemittelstrom über den ersten Anschluss des ersten Wegeventils in die Expansionsstrecke gelangt und von dort als zweiphasiger Niederdruck-Kältemittelstrom über den zweiten Anschluss des ersten Wegeventils dem ersten Wärmeübertrager zur vollständigen Verdampfung zugeführt wird.

Gleichzeitig kann gemäß einer Ausführungsform in diesem Fall der erste Wärmeübertrager mit dem erste Anschluss und der zweite Wärmeübertrager mit dem zweiten Anschluss des zweiten Wegeventils verbunden sein. Insbesondere kann das zweite Wegeventil in seiner ersten Stellung derart geschaltet sein, dass der aus dem ersten Wärmeübertrager austretende gasförmige Kältemittelstrom über den ersten Anschluss des zweiten Wegeventils in die Kompressionsstrecke zu dem Kompressor gelangt und als Hochdruck-Heißgasstrom über den zweiten Anschluss des zweiten Wegeventils zurück zu dem zweiten Wärmeübertrager gelangt.

Demgegenüber können in einer weiteren Ausführungsform der erste Wärmeübertrager als Kondensator und der zweite Wärmeübertrager als Verdampfer arbeiten, wenn sich das erste und das zweite Wegeventil jeweils in ihrer zweiten Stellung befinden (Umkehr des Kältemittelkreislaufs). Dazu kann der zweite Wärmeübertrager mit dem zweiten Anschluss und der erste Wärmeübertrager mit dem ersten Anschluss des ersten Wegeventils verbunden sein. Mit anderen Worten kann das erste Wegeventil in seiner zweiten Stellung derart geschaltet sein, dass ein aus dem ersten Wärmeübertrager austretender Hochdruck-Flüssigkältemittelstrom über den ersten Anschluss des ersten Wegeventils in die Expansionsstrecke gelangt und von dort als zweiphasiger Niederdruck-Kältemittelstrom über den zweiten Anschluss des ersten Wegeventils dem zweiten Wärmeübertrager zur vollständigen Verdampfung zugeführt wird.

Gleichzeitig kann gemäß einer Ausführungsform in diesem Fall der zweite Wärmeübertrager mit dem erste Anschluss und der erste Wärmeübertrager mit dem zweiten Anschluss des zweiten Wegeventils verbunden sein. Insbesondere kann das zweite Wegeventil in seiner zweiten Stellung derart geschaltet sein, dass der aus dem zweiten Wärmeübertrager austretende gasförmige Kältemittelstrom über den ersten Anschluss des zweiten Wegeventils in die Kompressionsstrecke zu dem Kompressor gelangt und als Hochdruck-Heißgasstrom über den zweiten Anschluss des zweiten Wegeventils zurück zu dem ersten Wärmeübertrager gelangt.

Insbesondere kann die Expansionsstrecke in beiden Stellungen des ersten und zweiten Wegeventils in gleicher Richtung durchströmt werden. Dies ist durch die beschriebene Verschaltung der Kältemittelkreislaufelemente mittels des ersten und zweiten Wegeventils gewährleistet, die es ermöglicht, dass nicht nur die Kompressionsstrecke mit dem Kompressor, sondern auch die Expansionstrecke mit dem Kältemittelsammler und dem Expansionsventil auch bei Umkehr des Kältemittelkreislaufs immer in gleicher Richtung durchströmt werden, während der erste und zweite Wärmeübertrager ihre Strömungsrichtung entsprechend ihrer Funktion als Verdampfer oder Kondensator ändern.

Mit anderen Worten bleibt in beiden Schaltstellungen des ersten und zweiten Wegeventils eine sequentielle Abfolge der Elemente der Expansionsstrecke gleich, d.h. der Kältemittelsammler befindet sich immer vor dem Expansionsventil, wodurch an dessen Eingang stets ein Vorhalt an flüssigem Kältemittel bereitsteht. Zudem sind keine weiteren Elemente, z.B. kein zweites Expansionsventil, in der Expansionsstrecke und auch keine weiteren Sensoren zur Überhitzungsregelung durch das Expansionsventil bei Umkehr des Kältemittelkreislaufs nötig.

Demgegenüber wechselt die Durchströmungsrichtung der beiden Wärmeübertrager bei Wechsel der Schaltstellungen des ersten und zweiten Wegeventils und der daraus folgenden Umkehr des Kältemittelkreislaufs. Das kann in Abhängigkeit der gewählten Wärmeübertragerbauart zu Vorteilen führen, z.B. im Hinblick auf eine Schwerkraftunterstützung in Fließrichtung bei aufrecht stehenden Plattenwärmeübertragern und/oder im Hinblick auf eine Reihenfolge durchströmter Bauteile in Lamellen-Rohr-Wärmeübertragern, welche einen Druckverlust positiv beeinflussen kann.

Um eine synchrone Umschaltung von der einen in die andere Stellung zu bewirken, können die beiden Wegeventile beispielsweise gleichzeitig angesteuert werden. Dazu können das erste und zweite Wegeventil z.B. über ein elektromagnetisches oder ein elektromotorisches Stellglied betätigt werden.

Alternativ können das erste und das zweite Wegeventil ein gemeinsames Stellglied aufweisen, um synchron/gleichzeitig von der ersten Stellung in die zweite Stellung umzuschalten und vice versa. Das Stellglied kann auch hier z.B. ein elektromagnetisches oder ein elektromotorisches Stellglied sein. Unter einem *"gemeinsamen Stellglied"* soll verstanden werden, dass beide Wegeventile von einem einzigen Stellglied/Aktor betätigt werden und eine *"harte",* z.B. eine mechanische Kopplung, zwischen den beiden Wegeventilen vorliegt.

Das erste und das zweite Wegeventil sind erfindungsgemäß als ein Bauteil/Aktor ausgeführt. Beispielsweise können das erste und zweite Wegeventil als ein Blockventil ausgeführt und in einem gemeinsamen Gehäuse integriert sein. Dadurch können die beiden Wegeventile als kompakte Einheit realisiert werden.

Gemäß einer Ausführungsform kann die Expansionsstrecke einen dritten Wärmeübertrager aufweisen, der mit dem ersten Anschluss des ersten Wegeventils und dem ersten Anschluss des zweiten Wegeventils verbunden sein kann. Zudem kann der dritte Wärmeübertrager zusätzlich mit einer Sauggasleitung des Kompressors in der Kompressionsstrecke und einem Eingang des Kältemittelsammlers in der Expansionsstrecke verbunden sein.

Gemäß einer Ausführungsform kann der dritte Wärmeübertrager dazu eingerichtet sein, Wärmeenergie von einer Hochdruckleitung auf eine Niederdruckleitung des Kältemittelkreislaufs zu übertragen. Die Hochdruckleitung kann dabei in einem Abschnitt des Kältemittelkreislaufs angeordnet sein, der sich zwischen einem Ausgang des Kompressors und einem Eingang des Expansionsventils befindet. Entsprechend kann die Niederdruckleitung in einem Abschnitt des Kältemittelkreislaufs angeordnet sein, der sich zwischen einem Ausgang des Expansionsventils und einem Eingang des Kompressors befindet. Insbesondere kann die Niederdruckleitung die Sauggasleitung des Kompressors sein.

Insbesondere kann es sich bei dem dritten Wärmeübertrager um einen inneren Wärmeübertrager handeln, dessen Primärseite mit dem ersten Anschluss des ersten Wegeventils verbunden ist, so dass er in der Expansionsstrecke stromaufwärts des Kältemittelsammlers angeordnet ist. Eine Sekundärseite des inneren Wärmeübertragers kann mit dem ersten Anschluss des zweiten Wegeventils verbunden und damit in der Kompressionsstrecke dem Kompressor vorgeschaltet sein. Auf diese Weise kann der innere Wärmeübertrager zur Sauggasüberhitzung vor dem Kompressor dienen, wodurch der jeweilige Verdampfer effizienter arbeiten kann.

Durch die direkte Anbindung des dritten Wärmeübertragers an den jeweils ersten Anschluss des ersten und zweiten Wegeventils (Eingang der Expansions- und Kompressionsstrecke) werden dessen Primär- und Sekundärseite in beiden Schaltstellungen der Wegeventile immer in gleicher Richtung durchströmt, wodurch eine Einbindung eines inneren Wärmeübertragers in einen Kältekreislauf mit nur einem Expansionsventil ermöglicht wird. Dabei dient der innere Wärmetauscher zur Effizienzsteigerung in dem Kältemittelkreislauf und ermöglicht eine höhere Temperaturspreizung zwischen Primärwärmequelle und Sekundärkreislauf.

Es wird deutlich, dass der hier offenbarte Kältemittelkreislauf, insbesondere durch die gleichbleibende Durchströmung der Expansionsstrecke bei Umkehr des Kreislaufs und die Gestaltung des ersten und zweiten Wegeventils, einen kompakten Aufbau ermöglicht und dabei gleichzeitig Vorteile durch die Änderung der Strömungsrichtung durch die Wärmeübertrager bietet.

### Kurzbeschreibung der Figuren

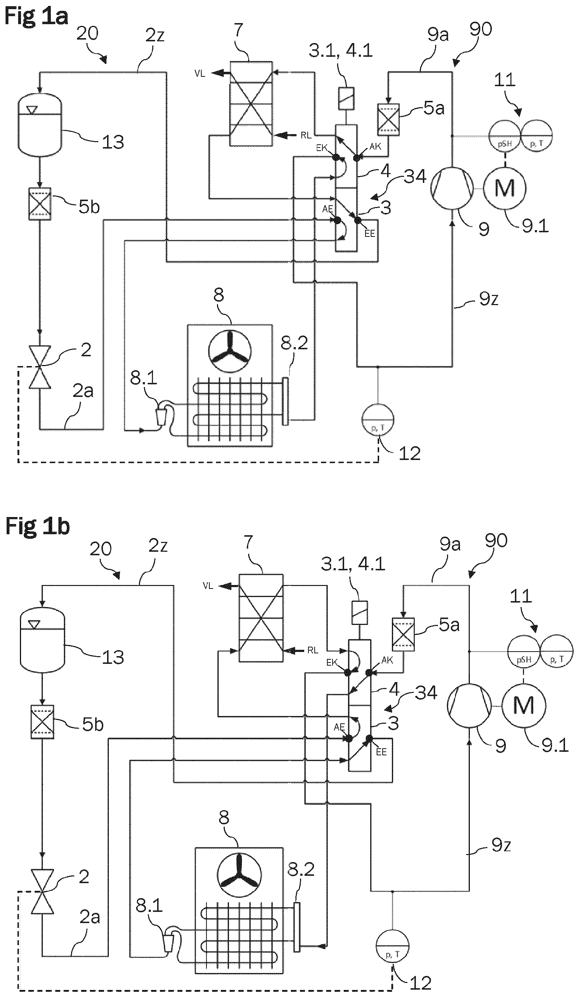

Die Figuren 1a und 1b zeigen schematisch jeweils ein Flussdiagramm eines Kältemittelkreislaufs gemäß einem Ausführungsbeispiel der Erfindung, wobei sich ein erstes und zweites Wegeventil des Kältemittelkreislaufs in Figur 1a in einer ersten Stellung und in Figur 1b in einer zweiten Stellung befinden.

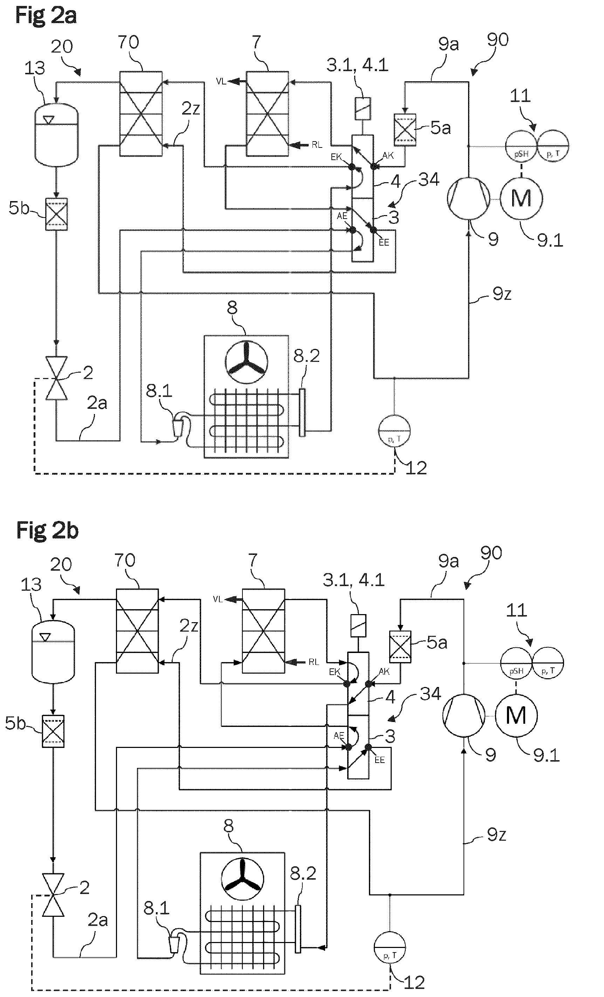

Die Figuren 2a und 2b zeigen schematisch jeweils ein Flussdiagramm eines Kältemittelkreislaufs gemäß einem weiteren Ausführungsbeispiel der Erfindung, wobei sich das erste und zweite Wegeventil des Kältemittelkreislaufs in Figur 2a in einer ersten Stellung und in Figur 2b in einer zweiten Stellung befinden.

### Detaillierte Beschreibung bevorzugter Ausführungsbeispiele

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt. In den Figuren sind gleiche oder vergleichbare Elemente mit gleichen Bezugszeichen versehen, so dass auf eine wiederholte Beschreibung der Elemente verzichtet wird, sofern dies nicht notwendig ist.

Die Figuren 1a und 1b zeigen schematisch jeweils ein Flussdiagramm eines Kältemittelkreislaufs gemäß einem Ausführungsbeispiel der Erfindung. Der Kältemittelkreislauf kann insbesondere in einer Wärmepumpe zum Heizen und Kühlen eines Gebäudes enthalten sein und umfasst einen ersten Wärmeübertrager 8, einen zweiten Wärmeübertrager 7, eine Kompressionsstrecke 90, eine Expansionsstrecke 20 sowie ein erstes Wegeventil 3 und ein zweites Wegeventil 4, die mittels eines ersten und zweiten Stellglieds 3.1, 4.1 von einer ersten Stellung in eine zweite Stellung und vice versa geschaltet werden können.

Das erste und zweite Wegeventil 3, 4 sind vorliegend als 4/2-Wegeventile ausgebildet. In dem gezeigten Ausführungsbeispiel sind das erste und zweite Stellglied 3.1, 4.1 zudem als gemeinsames Stellglied und das erste und zweite Wegeventil 3, 4 als gemeinsames Bauteil/Aktor 34 ausgeführt. Bei dem Aktor 34 kann es sich insbesondere um ein Blockventil 34 handeln. Durch die gezeigte Ausführung des ersten und zweiten Wegeventils 3, 4 als ein einzelner Aktor 34, der beide Wegeventile 3, 4 beinhaltet, ist eine synchrone Umschaltung von einer Stellung der beiden Wegeventile in eine andere Stellung gewährleistet.

Es ist jedoch ebenso möglich, dass die beiden Wegeventile 3, 4 als einzelne Aktoren ausgebildet sind, die auch über einzelne Stellglieder 3.1, 4.1 verfügen können. In diesem Fall kann eine synchrone Umschaltung beispielsweise durch ein gemeinsames Ansteuersignal umgesetzt werden. Alternativ können die beiden einzelnen Wegeventile 3, 4 mittels eines gemeinsamen Stellglieds betätigt werden.

Die Kompressionsstrecke 90 enthält vorliegend eine erste Kältemittelleitung 9z, einen Kompressor 9 mit einem Motor 9.1 und eine zweite Kältemittelleitung 9a. Die erste Kältemittelleitung 9z der Kompressionsstrecke 90 verbindet einen ersten Anschluss EK des zweiten Wegeventils 4 mit einem Eingang des Kompressors 9, und die zweite Kältemittelleitung 9a der Kompressionsstrecke 90 verbindet einen Ausgang des Kompressors 9 mit einem zweiten Anschluss AK des zweiten Wegeventils 4. Dabei stellt der erste Anschluss EK des zweiten Wegeventils 4 einen Eingang und der zweite Anschluss AK des zweiten Wegeventils 4 einen Ausgang der Kompressionsstrecke 90 dar. In der ersten Kältemittelleitung 9z ist vor dem Kompressor 9 ein Druck- und Temperatursensor 12 und in der zweiten Kältemittelleitung 9a ist nach dem Kompressor ein Sicherheitshochdruckschalter 11 angebracht. Der Sicherheitshochdruckschalter 11 ist signaltechnisch mit dem Kompressormotor 9.1 verbunden (angedeutet durch eine dünne gestrichelten Linien zwischen diesen Elementen), um diesen abzuschalten, wenn ein Kältemitteldruck nach dem Kompressor einen vorbestimmten, sicherheitskritischen Wert überschreitet. Zudem ist in der zweiten Kältemittelleitung 9a ein Filter 5a vor dem zweiten Anschluss AK des zweiten Wegeventils 4 angeordnet, welcher dieses vor etwaigen Partikeln aus dem Kältemittelkreislauf schützt.

Die Expansionsstrecke 20 enthält vorliegend eine erste Kältemittelleitung 2z, einen Kältemittelsammler 13, eine zweite Kältemittelleitung 2i, in der ein Filter 5b angeordnet ist, welcher ein nachfolgendes Expansionsventil vor Partikeln schützt, sowie eine dritte Kältemittelleitung 2a. Das Expansionsventil 2 ist signaltechnisch mit dem Druck- und Temperatursensor 12 in der ersten Kältemittelleitung 9z der Kompressionsstrecke 90 verbunden (angedeutet durch eine dünne gestrichelten Linien zwischen diesen Elementen), um eine Überhitzung des in den Kompressor 9 eintretenden Kältemittels zu regeln. Anstelle des kombinierten Druck- und Temperatursensors 12 können auch separate Sensoren zur Messung von Druck und Temperatur vor dem Kompressor 9 verwendet werden.

Die erste Kältemittelleitung 2z der Expansionsstrecke 20 verbindet einen ersten Anschluss EE des ersten Wegeventils 3 mit dem Kältemittelsammler 13, die zweite Kältemittelleitung 2i der Expansionsstrecke 20 verbindet den Kältemittelsammler 13 mit dem Expansionsventil 2 und die dritte Kältemittelleitung 2a der Expansionsstecke 20 verbindet das Expansionsventil 2 mit einem zweiten Anschluss AE des ersten Wegeventils 3. Dabei stellt der erste Anschluss EE des ersten Wegeventils 3 einen Eingang und der zweite Anschluss AE des ersten Wegeventils 4 einen Ausgang der Expansionsstecke 20 dar.

Der erste Wärmeübertrager 8 ist vorliegend als Lamellen-Rohr-Wärmeübertrager mit nicht näher bezeichneten senkrechten Lamellen und zwei nicht näher bezeichneten, im Wesentlichen horizontal angeordneten Rohrschlangen ausgeführt. Die Rohrschlangen sind an einem Ende mit einem Kältemittelverteiler 8.1 verbunden, der an einem ersten Kältemittelanschluss des ersten Wärmeübertragers 8 angebracht ist. Der Kältemittelverteiler 8.1 kann beispielsweise ein Venturi-Verteiler sein. An einem gegenüberliegenden zweiten Kältemittelanschluss des ersten Wärmeübertragers 8 ist ein Sammelrohr 8.2 vertikal angeordnet, in das die beiden Rohrschlangen mit ihrem anderen Ende münden. Der erste und der zweite Kältemittelanschluss des ersten Wärmeübertragers 8 können abhängig von dessen Funktion als Kältemitteleingang oder -ausgang dienen. Der erste Wärmeübertrager 7 kann beispielsweise dazu eingerichtet sein Wärme aus einer äußerer Umgebung (z.B. Außenluft, Umgebungsluft) des Gebäudes aufzunehmen bzw. Wärme an die äußere Umgebung des Gebäudes abzugeben.

Der zweite Wärmeübertrager 7 ist vorliegend als vertikal angeordneter Plattenwärmeübertrager ausgebildet, der auf seiner Sekundärseite z.B. mit einem Heiz-/Kühlkreislauf des Gebäudes verbunden sein kann (siehe Pfeile VL, RL die einen Vorlauf und einen Rücklauf z.B. eines Heiz-/Kühlkreislaufs eines Gebäudes andeuten). Der zweite Wärmeübertrager 7 umfasst zwei nicht näher bezeichnete Kältemittelanschlüsse, die je nach Funktion des zweiten Wärmeübertragers 7 als Kältemitteleingang oder -ausgang dienen. Dabei ist ein erster der beiden Kältemittelanschlüsse an einem oberen und ein zweiter an einem unteren Ende des zweiten Wärmeübertragers 7 angebracht.

In Figur 1a befindet sich das Blockventil 34 mit dem ersten und zweiten Wegeventil 3, 4 in einer ersten Stellung (erste Stellung des ersten und zweiten Wegeventils), in dem der gezeigte Kältekreislauf, z.B. in einer Wärmepumpe, zum Heizen eines Gebäudes verwendet werden kann. In diesem Fall dient der erste Wärmeübertrager 8 als Verdampfer, der Wärme aus der äußeren Umgebung des Gebäudes aufnimmt, und der zweite Wärmeübertrager 7 als Kondensator, der Wärme an den Heiz-/Kühlkreislauf des Gebäudes abgibt.

Dazu verbindet das erste Wegeventil 3 in seiner ersten Stellung den zweiten, unteren Kältemittelanschluss des zweiten Wärmeübertragers 7 bzw. eine daran angeschlossene, nicht näher bezeichnete Kältemittelleitung, mit dem ersten Anschluss EE des ersten Wegeventils 3, so dass unter hohem Druck stehendes, flüssiges Kältemittel in die Expansionsstrecke 20 gelangt und mittels deren erster Kältemittelleitung 2z zu dem Kältemittelsammler 13 geleitet wird. Von dort gelangt das Kältemittel über den Filter 5b in der zweiten Kältemittelleitung 2i der Expansionsstrecke 20 zu dem Expansionsventil 2, mittels dem das Kältemittel entspannt wird. Das nun zweiphasig vorliegende Kältemittel strömt nachfolgend über die dritte Kältemittelleitung 2a der Expansionsstrecke 20 zu dem zweiten Anschluss AE des ersten Wegeventils 3. Über diesen wird das Kältemittel in der ersten Stellung des ersten Wegeventils 3 aus der Expansionsstrecke 20 zu dem ersten Wärmeübertrager 8 geleitet. Dazu verbindet eine nicht näher bezeichnete weitere Kältemittelleitung den zweiten Anschluss AE des ersten Wegeventils 3 in dessen erster Stellung mit dem Kältemittelverteiler 8.1, über den das Kältemittel in den ersten Wärmeübertrager 8 gelangt. Dabei bewirkt der Kältemittelverteiler 8.1 eine weitere Drosselung des Kältemittelstroms, die eine gleichmäßige Verteilung des Kältemittels in den Rohrschlangen des ersten Wärmeübertragers 8 zu Folge hat, in denen das Kältemittel dann vollständig verdampft bzw. überhitzt wird. Dazu wird eine Stellung/ein Öffnungsquerschnitt des Expansionsventils 2 gemäß dem mit dem Sensor 12 gemessenen Druck- und der Temperatur vor dem Kompressor 9 geregelt, so dass z.B. nur so viel Kältemittel in den ersten Wärmeübertrager 8 gelangt, wie verdampft/überhitzt werden kann.

Das verdampfte bzw. überhitzte Kältemittel verlässt den ersten Wärmeübertrager 8 über das Sammelrohr 8.2 und gelangt von dort über eine weitere nicht näher bezeichnete Kältemittelleitung zu dem zweiten Wegeventils 4, das in seiner ersten Stellung den ersten Anschluss EK mit dieser Kältemittelleitung verbindet. Von dort strömt das gasförmige Kältemittel über die erste Kältemittelleitung 9z der Kompressionsstrecke 90 zu dem Kompressor 9, in dem es verdichtet wird, um dann auf eine hohen Druckniveau über den Filter 5a zu dem zweiten Anschluss AK des zweiten Wegeventils 4 zu gelangen, der in dessen erster Stellung über eine nicht näher bezeichnete Kältemittelleitung mit dem ersten Kältemittelanschluss des zweiten Wärmeübertragers 7 verbunden ist. Somit gelangt das gasförmige, verdichtete Kältemittel über dessen oberen Anschluss in den zweiten Wärmeübertrager 7, um in diesem zu kondensieren, und tritt als flüssiges Kältemittel wieder aus dessen unterem Anschluss aus. Aufgrund der Kältemittelführung von dem oberen ersten Anschluss zu dem unteren zweiten Anschluss während der Kondensation in dem zweiten Wärmeübertrager 7 wird der Austritt des flüssigen Kältemittels aus dem zweiten Wärmeübertrager 7 durch die Schwerkraft unterstützt.

In Figur 1b befindet sich das Blockventil 34 mit dem ersten und zweiten Wegeventil 3, 4 hingegen in einer zweiten Stellung (zweite Stellung des ersten und zweiten Wegeventils), in dem der gezeigte Kältekreislauf, z.B. in einer Wärmepumpe, zum Kühlen eines Gebäudes verwendet werden kann. In diesem Fall dient der erste Wärmeübertrager 8 als Kondensator, der Wärme an die äußeren Umgebung des Gebäudes abgibt, und der zweite Wärmeübertrager 7 als Verdampfer, der Wärme aus dem Heiz-/Kühlkreislauf des Gebäudes aufnimmt.

In diesem Fall verbindet das erste Wegeventil 3 in seiner zweiten Stellung den Kältemittelverteiler 8.1 des ersten Wärmeübertragers 8 bzw. die daran angeschlossene, nicht näher bezeichnete Kältemittelleitung, mit dem ersten Anschluss EE des ersten Wegeventils 3, so dass in dem ersten Wärmeübertrager 8 kondensiertes Kältemittel in die Expansionsstrecke 20 gelangt, in der es den gleichen Weg wie in Figur 1a nimmt und ebenfalls über dem zweiten Anschluss AE des ersten Wegeventils 3 die Expansionsstrecke 20 wieder verlässt. In der zweiten Stellung des ersten Wegeventils 3 ist der zweite Anschluss AE über die entsprechende Kältemittelleitung mit dem unteren zweiten Anschluss des zweiten Wärmeübertragers 7 verbunden, über den das nun zweiphasig vorliegende Kältemittel in den zweiten Wärmeübertrager 7 gelangt, um darin vollständig verdampft bzw. überhitzt zu werden. Die Dosierung des Kältemittels in den zweiten Wärmeübertrager 7 erfolgt mittels Überhitzungsregelung des Expansionsventils 2 genau wie in Figur 1a beschrieben, da das Kältemittel die Expansionsstrecke 20 auch bei Umkehr des Kältemittelkreislaufs in gleicher Richtung passiert. Aufgrund der weiteren Verdampfung bzw. Überhitzung des Kältemittels steigt dieses in dem zweiten Wärmeübertrager 7 nach oben und verlässt diesen über dessen oberen ersten Anschluss.

Es wird deutlich, dass sich eine Umkehr der Durchströmungs-richtung des zweiten Wärmeübertragers 7 bei Umkehr des Kältemittelkreislaufs positiv auf dessen Strömungsverhalten auswirkt, wenn der zweite Wärmeübertrager 7 wie vorliegend als vertikal angeordneter Plattenwärmeübertrager ausgeführt ist.

Der obere erste Anschluss des zweiten Wärmeübertragers 7 ist mittels der entsprechenden Kältemittelleitung in der zweiten Stellung des zweiten Wegeventils 4 mit dessen erstem Anschluss EK verbunden, über den das überhitzte Kältemittel in die Kompressionsstrecke 90 gelangt, die es in gleicher Weise wie in Figur 1a beschrieben passiert und über den zweiten Anschluss AK des zweiten Wegeventils 4 als Heißgas auf hohem Druckniveau wieder verlässt.

In der in Figur 1b gezeigten zweiten Stellung des zweiten Wegeventils 4 ist der zweite Anschluss AK des zweiten Wegeventils über die entsprechende Kältemittelleitung mit dem Sammelrohr 8.2 des ersten Wärmeübertragers 8 verbunden, über welches das verdichtet Kältemittel in den ersten Wärmeübertrager 8 gelangt. Es wird deutlich, dass eine Umkehr der Durchströmungsrichtung des ersten Wärmeübertragers 8 bei Umkehr des Kältemittelkreislaufs eine Reduktion der Druckverluste bei Eintritt des Heißgases in den ersten Wärmeübertrager 8 zur Folge hat, da das Sammelrohr 8.2 eine geringere Drosselung bewirkt als der Kältemittelverteiler 8.1 auf der gegenüberliegenden Seite. Folglich wirkt sich eine Umkehr der Durchströmungsrichtung bei Kältekreisumkehr positiv auf das Strömungsverhalten des ersten Wärmeübertragers 8 aus, wenn dieser wie vorliegend als Lamellen-Rohr-Wärmeübertrager ausgeführt ist.

Die Figuren 2a und 2b zeigen schematisch jeweils ein Flussdiagramm eines Kältemittelkreislaufs gemäß einem weiteren Ausführungsbeispiel der Erfindung, wobei sich das erste und zweite Wegeventil des Kältemittelkreislaufs in Figur 2a in einer ersten Stellung und in Figur 2b in einer zweiten Stellung befinden.

Der in den Figuren 2a und 2b gezeigte Kältemittelkreislauf unterscheidet sich von dem in den Figuren 1a und 1b gezeigten lediglich durch eine Ergänzung eines inneren Wärmeübertragers (dritter Wärmeübertrager) 70, der an dem Eingang der Expansionsstrecke 20 angeordnet ist. Dabei ist eine nicht näher bezeichnete Primärseite des inneren Wärmeübertragers 70 mit dem ersten Anschluss EE des ersten Wegeventils 3 und eine nicht näher bezeichnete Sekundärseite des inneren Wärmeübertragers 70 mit dem ersten Anschluss EK des zweiten Wegeventils verbunden. Auf diese Weise wird ein Niederdruck-Sauggasstrom aus dem gerade als Verdampfer arbeitenden Wärmeübertrager 8, 7 zunächst durch den inneren Wärmeübertrager 70 geleitet, bevor er in die Kompressionsstecke 90 eintritt, so dass die Überhitzung des Kältemittels (Sauggasüberhitzung) dem als Verdampfer arbeitenden Wärmeübertrager 8, 7 nachgelagert werden kann, wodurch dieser effizienter arbeiten kann. Da sich eine Strömungsrichtung durch die Primär- und Sekundärseite bei Umkehr des Kältemittelkreislaufs nicht ändert (vgl. Figur 2a mit Figur 2b), wird eine Einbindung eines inneren Wärmeübertragers 70 in einen Kältemittelkreislauf mit nur einem Expansionsventil ermöglicht, wodurch sich ein kompakterer Aufbau des Kältemittelkreislaufs realisieren lässt.

Anhand der in den Figuren 1a bis 2b gezeigten Ausführungsbeispiele wird deutlich, dass der hier offenbarte Kältemittelkreislauf, insbesondere durch die gleichbleibende Durchströmung der Expansionsstrecke bei Umkehr des Kreislaufs und die Gestaltung des ersten und zweiten Wegeventils, einen kompakten Aufbau ermöglicht und dabei gleichzeitig Vorteile durch die Änderung der Strömungsrichtung durch die Wärmeübertrager bietet.

## Patentansprüche

1. Kältemittelkreislauf, insbesondere ein Kältemittelkreislauf für eine Wärmepumpe zum Heizen und Kühlen eines Gebäudes, umfassend
- einen ersten Wärmeübertrager (8), der dazu eingerichtet ist als Verdampfer oder als Kondensator zu fungieren;
- einen zweiten Wärmeübertrager (7), der ebenfalls dazu eingerichtet ist als Kondensator oder als Verdampfer zu fungieren;
- eine Kompressionsstrecke (90), die stromabwärts des ersten Wärmeübertragers (8) oder stromabwärts des zweiten Wärmeübertragers (7) angeordnet ist;
- eine Expansionsstrecke (20), die stromabwärts des zweiten Wärmeübertragers (8) oder stromabwärts des ersten Wärmeübertragers (7) angeordnet ist;
- ein erstes Wegeventil (3), das dazu eingerichtet ist, der Expansionsstecke (20) Kältemittel zuzuführen und Kältemittel aus der Expansionsstecke (20) abzuführen; und
- ein zweites Wegeventil (4), das dazu eingerichtet ist, der Kompressionsstrecke (90) Kältemittel zuzuführen und Kältemittel aus der Kompressionsstrecke (90) abzuführen, wobei das erste und das zweite Wegeventil (3, 4) als ein Bauteil ausgeführt sind.

2. Kältemittelkreislauf nach Anspruch 1, wobei das erste und zweite Wegeventil (3, 4) dazu eingerichtet sind, synchron von einer ersten Stellung in eine zweite Stellung umzuschalten und umgekehrt.

3. Kältemittelkreislauf nach Anspruch 2, wobei das erste und das zweite Wegeventil (3, 4) ein gemeinsames Stellglied aufweisen.

4. Kältemittelkreislauf nach einem der Ansprüche 2 oder 3, wobei die Expansionsstrecke (20) in beiden Stellungen des ersten und zweiten Wegeventils (3, 4) in gleicher Richtung durchströmt wird.

5. Kältemittelkreislauf nach einem der vorstehenden Ansprüche, wobei ein erster Anschluss (EE) des ersten Wegeventils (3) mit einem Ende der Expansionsstrecke (20) und ein zweiter Anschluss (AE) des ersten Wegeventils (3) mit einem anderen Ende der Expansionsstrecke (20) verbunden ist.

6. Kältemittelkreislauf nach einem der vorstehenden Ansprüche, wobei ein erster Anschluss (EK) des zweiten Wegeventils (4) mit einem Ende der Kompressionsstrecke (90) und ein zweiter Anschluss (AK) des zweiten Wegeventils (4) mit dem anderen Ende der Kompressionsstrecke (90) verbunden ist.

7. Kältemittelkreislauf nach Anspruch 5 oder 6, wobei in der ersten Stellung des ersten und zweiten Wegeventils der erste Wärmeübertrager (8) mit dem zweiten Anschluss (AE) und der zweite Wärmeübertrager (7) mit dem ersten Anschluss (EE) des ersten Wegeventils (3) verbunden ist.

8. Kältemittelkreislauf nach einem der Ansprüche 5 bis 7, wobei in der ersten Stellung des ersten und zweiten Wegeventils der erste Wärmeübertrager (8) mit dem ersten Anschluss (EK) und der zweite Wärmeübertrager (7) mit dem zweiten Anschluss (AK) des zweiten Wegeventils (4) verbunden ist.

9. Kältemittelkreislauf nach einem der Ansprüche 5 bis 8, wobei in der zweiten Stellung des ersten und zweiten Wegeventils der zweite Wärmeübertrager (7) mit dem zweiten Anschluss (AE) und der erste Wärmeübertrager (8) mit dem ersten Anschluss (EE) des ersten Wegeventils (3) verbunden ist.

10. Kältemittelkreislauf nach einem der Ansprüche 5 bis 9, wobei in der zweiten Stellung des ersten und zweiten Wegeventils der zweite Wärmeübertrager (7) mit dem ersten Anschluss (EK) und der erste Wärmeübertrager (8) mit dem zweiten Anschluss (AK) des zweiten Wegeventils (4) verbunden ist.

11. Kältemittelkreislauf nach einem der vorstehenden Ansprüche, wobei die Expansionsstrecke (20) mindestens einen Kältemittelsammler (13) und mindestens ein Expansionsventil (2) aufweist.

12. Kältemittelkreislauf nach Anspruch 11, wobei die Expansionsstrecke einen dritten Wärmeübertrager (70) aufweist, der mit dem ersten Anschluss (EE) des ersten Wegeventils (3) und dem ersten Anschluss (EK) des zweiten Wegeventils (4) verbunden ist.

13. Kältemittelkreislauf nach Anspruch 12, wobei der dritte Wärmeübertrager (70) dazu eingerichtet ist, Wärmeenergie von einer Hochdruckleitung (9a) auf eine Niederdruckleitung (9z) des Kältemittelkreislaufs zu übertragen.

14. Kältemittelkreislauf nach Anspruch 12 oder 13, wobei der dritte Wärmeübertrager (70) zusätzlich mit einer Sauggasleitung (9z) eines Kompressors (9) in der Kompressionsstrecke (90) und einem Eingang des Kältemittelsammlers (13) in der Expansionsstrecke (20) verbunden ist.

15. Wärmepumpe zum Heizen und Kühlen eines Gebäudes umfassend einen Kältemittelkreislauf nach einem der vorstehenden Ansprüche.

## Claims

1. Refrigerant circuit, in particular a refrigerant circuit for a heat pump for heating and cooling a building, comprising
- a first heat exchanger (8) which is configured to function as an evaporator or as a condenser;
- a second heat exchanger (7) which is also configured to function as a condenser or as an evaporator;
- a compression section (90) which is arranged downstream of the first heat exchanger (8) or downstream of the second heat exchanger (7);
- an expansion section (20) which is arranged downstream of the second heat exchanger (8) or downstream of the first heat exchanger (7);
- a first directional control valve (3) which is configured to supply refrigerant to the expansion section (20) and to discharge refrigerant from the expansion section (20); and
- a second directional control valve (4) which is configured to supply refrigerant to the compression section (90) and to discharge refrigerant from the compression section (90), wherein the first and second directional control valves (3, 4) are configured as one component.

2. Refrigerant circuit according to claim 1, wherein the first and second directional control valves (3, 4) are configured to switch over synchronously from a first position into a second position and vice versa.

3. Refrigerant circuit according to claim 2, wherein the first and second directional control valves (3, 4) have a common actuator.

4. Refrigerant circuit according to either of claims 2 and 3, wherein the expansion section (20) is flowed through in the same direction in both positions of the first and second directional control valves (3, 4).

5. Refrigerant circuit according to one of the preceding claims, wherein a first port (EE) of the first directional control valve (3) is connected to one end of the expansion section (20) and a second port (AE) of the first directional control valve (3) is connected to another end of the expansion section (20).

6. Refrigerant circuit according to one of the preceding claims, wherein a first port (EK) of the second directional control valve (4) is connected to one end of the compression section (90) and a second port (AK) of the second directional control valve (4) is connected to the other end of the compression section (90).

7. Refrigerant circuit according to claim 5 or 6, wherein, in the first position of the first and second directional control valves, the first heat exchanger (8) is connected to the second port (AE) and the second heat exchanger (7) is connected to the first port (EE) of the first directional control valve (3).

8. Refrigerant circuit according to one of claims 5 to 7, wherein, in the first position of the first and second directional control valves, the first heat exchanger (8) is connected to the first port (EK) and the second heat exchanger (7) is connected to the second port (AK) of the second directional control valve (4).

9. Refrigerant circuit according to one of claims 5 to 8, wherein, in the second position of the first and second directional control valves, the second heat exchanger (7) is connected to the second port (AE) and the first heat exchanger (8) is connected to the first port (EE) of the first directional control valve (3).

10. Refrigerant circuit according to one of claims 5 to 9, wherein, in the second position of the first and second directional control valves, the second heat exchanger (7) is connected to the first port (EK) and the first heat exchanger (8) is connected to the second port (AK) of the second directional control valve (4).

11. Refrigerant circuit according to one of the preceding claims, wherein the expansion section (20) has at least one refrigerant receiver (13) and at least one expansion valve (2).

12. Refrigerant circuit according to Claim 11, wherein the expansion section has a third heat exchanger (70) which is connected to the first port (EE) of the first directional control valve (3) and the first port (EK) of the second directional control valve (4).

13. Refrigerant circuit according to Claim 12, wherein the third heat exchanger (70) is configured to transfer thermal energy from a high-pressure line (9a) to a low-pressure line (9z) of the refrigerant circuit.

14. Refrigerant circuit according to Claim 12 or 13, wherein the third heat exchanger (70) is additionally connected to a suction gas line (9z) of a compressor (9) in the compression section (90) and to an inlet of the refrigerant receiver (13) in the expansion section (20).

15. Heat pump for heating and cooling a building, comprising a refrigerant circuit according to one of the preceding claims.

## Revendications

1. Circuit de fluide frigorigène, en particulier circuit de fluide frigorigène pour une pompe à chaleur pour le chauffage et le refroidissement d'un bâtiment, comprenant
- un premier échangeur de chaleur (8) qui est conçu pour fonctionner comme évaporateur ou comme condenseur ;
- un deuxième échangeur de chaleur (7) qui est également conçu pour fonctionner comme condenseur ou comme évaporateur ;
- une section de compression (90) qui est disposée en aval du premier échangeur de chaleur (8) ou en aval du deuxième échangeur de chaleur (7) ;
- une section d'expansion (20) qui est disposée en aval du deuxième échangeur de chaleur (8) ou en aval du premier échangeur de chaleur (7) ;
- un premier distributeur (3) qui est conçu pour amener du fluide frigorigène à la section d'expansion (20) et pour évacuer du fluide frigorigène de la section d'expansion (20) ; et
- un deuxième distributeur (4) qui est conçu pour amener du fluide frigorigène à la section de compression (90) et pour évacuer du fluide frigorigène de la section de compression (90), le premier et le deuxième distributeur (3, 4) étant réalisés sous forme de composant.

2. Circuit de fluide frigorigène selon la revendication 1, le premier et le deuxième distributeur (3, 4) étant conçus pour commuter de manière synchrone d'une première position à une deuxième position et inversement.

3. Circuit de fluide frigorigène selon la revendication 2, le premier et le deuxième distributeur (3, 4) présentant un actionneur commun.

4. Circuit de fluide frigorigène selon l'une quelconque des revendications 2 ou 3, la section d'expansion (20) étant parcourue dans la même direction dans les deux positions du premier et du deuxième distributeur (3, 4).

5. Circuit de fluide frigorigène selon l'une quelconque des revendications précédentes, un premier raccord (EE) du premier distributeur (3) étant connecté à une extrémité de la section d'expansion (20) et un deuxième raccord (AE) du premier distributeur (3) étant connecté à une autre extrémité de la section d'expansion (20).

6. Circuit de fluide frigorigène selon l'une quelconque des revendications précédentes, un premier raccord (EK) du deuxième distributeur (4) étant connecté à une extrémité de la section de compression (90) et un deuxième raccord (AK) du deuxième distributeur (4) étant connecté à l'autre extrémité de la section de compression (90).

7. Circuit de fluide frigorigène selon la revendication 5 ou 6, dans la première position du premier et du deuxième distributeur, le premier échangeur de chaleur (8) étant connecté au deuxième raccord (AE) et le deuxième échangeur de chaleur (7) étant connecté au premier raccord (EE) du premier distributeur (3).

8. Circuit de fluide frigorigène selon l'une quelconque des revendications 5 à 7, dans la première position du premier et du deuxième distributeur, le premier échangeur de chaleur (8) étant connecté au premier raccord (EK) et le deuxième échangeur de chaleur (7) étant connecté au deuxième raccord (AK) du deuxième distributeur (4).

9. Circuit de fluide frigorigène selon l'une quelconque des revendications 5 à 8, dans la deuxième position du premier et du deuxième distributeur, le deuxième échangeur de chaleur (7) étant connecté au deuxième raccord (AE) et le premier échangeur de chaleur (8) étant connecté au premier raccord (EE) du premier distributeur (3).

10. Circuit de fluide frigorigène selon l'une quelconque des revendications 5 à 9, dans la deuxième position du premier et du deuxième distributeur, le deuxième échangeur de chaleur (7) étant connecté au premier raccord (EK) et le premier échangeur de chaleur (8) étant connecté au deuxième raccord (AK) du deuxième distributeur (4).

11. Circuit de fluide frigorigène selon l'une quelconque des revendications précédentes, la section d'expansion (20) présentant au moins un récepteur de fluide frigorigène (13) et au moins une soupape d'expansion (2).

12. Circuit de fluide frigorigène selon la revendication 11, la section d'expansion présentant un troisième échangeur de chaleur (70) qui est connecté au premier raccord (EE) du premier distributeur (3) et au premier raccord (EK) du deuxième distributeur (4).

13. Circuit de fluide frigorigène selon la revendication 12, le troisième échangeur de chaleur (70) étant conçu pour transférer de l'énergie thermique d'une conduite haute pression (9a) à une conduite basse pression (9z) du circuit de fluide frigorigène.

14. Circuit de fluide frigorigène selon la revendication 12 ou 13, le troisième échangeur de chaleur (70) étant en outre connecté à une conduite de gaz d'aspiration (9z) d'un compresseur (9) dans la section de compression (90) et à une entrée du récepteur de fluide frigorigène (13) dans la section d'expansion (20).

15. Pompe à chaleur pour le chauffage et le refroidissement d'un bâtiment comprenant un circuit de fluide frigorigène selon l'une quelconque des revendications précédentes.
